# EUROPEAN PATENT SPECIFICATION

(11) **EP 0 783 779 B1**
(45) Date of publication and mention of the grant of the patent: **27.10.2004**
(21) Application number: 94927977.2
(22) Date of filing: 31.08.1994
(51) Int. Cl.: H01S 3/036, H01S 3/225

(54) **GAS REPLENISHMENT METHOD AND APPARATUS FOR EXCIMER LASERS**
VERFAHREN UND GERÄT ZUM WIEDERAUFFÜLLEN VON EXCIMER-LASERN MIT GAS
PROCEDE ET APPAREIL DE REALIMENTATION EN GAZ DE LASERS EXCIMERES

(43) Date of publication of application: 16.07.1997
(73) Proprietor: Cymer, Inc., San Diego, CA 92127 (US)
(72) Inventor: SANDSTROM, Richard, L., Encinitas, CA 92024 (US)
(74) Representative: Wombwell, Francis
(86) International application number: PCT/US1994/009836
(87) International publication number: WO 1996/007225

(56) References cited:
- JP-A- 4 334 079
- US-A- 4 722 090
- US-A- 4 888 786
- US-A- 4 977 573
- US-A- 5 073 896
- US-A- 5 090 020
- US-A- 5 440 578

## Description

### BACKGROUND OF THE INVENTION

### 1. Field of the Invention

The invention generally relates to gas lasers and, in particular, relates to methods and apparatuses for replenishing gas mixtures within an excimer gas laser.

### 2. Description of Related Art

Many gas lasers, particularly excimer lasers, maintain a mixture of two or more gases in a lasing chamber for use in generating a laser beam. A typical excimer laser for example may include a gas mixture composed of fluorine, krypton, and neon. The efficiency of the laser depends, in part, on the particular composition of the gas mixture. A deviation from an optimal composition may decrease the efficiency of the laser, thereby resulting in an output beam of less power.
Moreover, a non-optimal gas composition may effect the ability of the laser to maintain a desired output frequency or to maintain a desired pulse rate. A substantial deviation in the gas mixture from an optimal mixture may also affect the durability and reliability of the laser, including an increase in corrosion or wear within the laser itself.

The composition of the gas mixture may change as a function of time depending upon several factors. In particular, for fluorine/krypton excimer lasers, the amount of fluorine tends to be depleted while the excimer laser is operated. Fluorine, being a highly reactive halogen, tends to react with materials within the excimer laser by an amount sufficient to lower the amount of fluorine relative to krypton.

For example, a typical fluorine/krypton excimer laser may include a gas mixture composed of 0.1 percent, 1.0 percent krypton, and 98.9 percent neon. During operation of the excimer laser, fluorine becomes depleted thereby changing the relative compositions described above. The krypton and neon components, being substantially nonreactive noble gases, are not as significantly depleted as the fluorine. However, the krypton and neon components are somewhat depleted during operation, possibly as a result of diffusion of the krypton and neon from the gas chamber.

The extent to which the various components of the gas mixture are depleted depends, on a variety of factors and the actual composition of the gas mixture, after a period of time, cannot be easily determined.
However, once the gas mixture has deviated substantially from an optimal composition, the efficiency of the laser may be sufficiently degraded to require replenishment of the gas mixture.
Conventionally, the entire gas mixture is flushed out of the laser and replaced with a new mixture. The gas mixture is replaced using a pre-mix which includes all components of the gas mixture in their desired or optimal relative amounts. For the fluorine/krypton laser discussed above, the pre-mix includes 0.1 percent fluorine, 1.0 percent krypton and 98.9 percent neon.

Although a complete replacement of the gas mixture is effective to compensate for a deviation in the relative composition of the gases such is not a particularly cost effective or efficient method for compensating for gas depletion. Indeed, excimer laser pre-mixes have become quite expensive and, particularly for large scale excimer lasers having considerable gas chamber volume, the cost of completely flushing the gas chamber and replacing it with pre-mix can be substantial.

Accordingly, methods have been proposed for compensating for gas component depletion without requiring a complete replacement of the gas mixture. To this end, some fluorine/krypton excimer lasers are provided with a means for adding fluorine to an existing gas mixture, without requiring complete replacement of the gas mixture. A fluorine source having a mixture of fluorine and neon may be provided for replenishing depleted fluorine. The fluorine/neon mixture is supplied to the gas chamber in an attempt to compensate for depleted fluorine. With such a technique, the period between complete replacement of the gas mixture can be extended somewhat and the overall cost effectiveness of the excimer laser system is improved. However, by providing a replenishment source which includes a mixture of only fluorine and neon, depletion of krypton cannot be effectively compensated. Indeed, with each addition of fluorine/neon gas, the relative percentage of krypton in the gas chamber mixture is decreased. The general lowering in the percentage of krypton is exacerbated if any bleed-down is required. Bleed-down may be required if the addition of the fluorine/ neon gas mixture increases the overall pressure within the chamber above a desired amount, such that a portion of the gas mixture must be released to lower the pressure. When the gas pressure is lowered during bleed-down, additional amounts of krypton are lost.

Furthermore, methods for compensating for fluorine depletion by adding fluorine mixture have other disadvantages. In particular, no effective method has heretofore been developed for determining when fluorine should be added and how much fluorine should be added. In this regard, no effective methods have been developed for inexpensively determining the relative composition in the gas mixture within the laser chamber as a function of time. Accordingly, the methods for replenishing the fluorine using the fluorine/neon mixture have been somewhat crude guess-based methods.

Japanese laid open publication Hei 4-334079 by Minagawa et al. discloses a method for varying a gas mixture within a gas chamber of a gas laser where the gas mixture includes a halogen, a first noble gas, and a second noble gas of a desired composition. The method comprises the steps of; determining a difference between the desired composition and an actual composition of the gas mixture of the gas chamber; selectively inserting gas mixture containing a halogen, a first noble gas and a second noble gas into the gas chamber; selectively inserting a gas mixture containing a first noble gas and a second noble gas; selectively releasing a portion of the gas mixture from the gas chamber; each of the foregoing steps are performed by amounts sufficient to adjust an actual composition of the gas mixture within the gas chamber toward the desired composition.

United States patent 4 977 573 to Bittenson et al. discloses an apparatus for varying a gas mixture within a gas chamber of a gas laser in which the gas mixture includes a halogen, a first rare gas and a buffer gas and where the gas mixture has a desired composition. The apparatus comprises an inlet valve for inserting a mixture B of a halogen, a noble gas and a buffer gas into the gas chamber, an inlet valve for inserting a mixture A of the noble gas and the buffer gas into the gas chamber, an outlet valve for releasing a portion of the gas mixture from the gas chamber and control means for separately controlling the operation of the inlet valves and the outlet valve to vary an actual gas composition within the gas chamber toward the desired composition.

These techniques of using two gas mixtures allow both the fluorine and the krypton components to be replenished.

### SUMMARY OF THE INVENTION

From the foregoing it can be appreciated that there is a need to provide an improved method and apparatus for replenishing a gas mixture within a gas laser. One of the general objects of the invention is to provide such an improved method and apparatus. A particular object of the invention is to provide an improved method and apparatus for replenishing a gas mixture within a fluorine/krypton excimer laser having a gas mixture composed of fluorine, krypton and neon. It is also a particular object of the invention to compensate for depletion in fluorine within such an excimer laser while also compensating for a depletion in krypton within the chamber. A further object of the invention is to provide a refined method for replenishing the gas mixture within an excimer laser without requiring an actual measurement of the relative percentages of the gases within the laser.

These objects, and other general objects of the invention, are achieved by the provision of a method and apparatus for replenishing the gas mixture within a gas laser wherein a pair of gas replenishment sources are provided with a first gas source providing a first gas mixture and a second gas source providing a second gas mixture.

The invention provides a method for varying a chamber gas mixture in a gas of a gas laser, said chamber gas mixture including a halogen, a first noble gas and a second noble gas, said chamber gas mixture having a desired composition, said method comprising the steps of:
determining a difference between the desired composition and an actual composition of the chamber gas mixture;
determining a first amount of a first gas mixture consisting of the halogen and the second noble gas that is to be added to the gas chamber, and a second amount of a second gas mixture consisting of the first noble gas and the second noble gas that is to be added to the gas chamber to adjust the actual composition of said chamber gas mixture toward the desired composition; and
selectively adding said first amount of said first gas mixture and said second amount of said second gas mixture into said gas chamber, and selectively releasing a portion of said chamber gas mixture from said gas chamber ;
with each of the foregoing steps performed by amounts sufficient to adjust an actual composition of said chamber gas mixture within said chamber toward the desired composition; and
receiving a first signal from a wave meter and a second signal from a line narrowing mechanism; and
determining the difference between the desired composition and the actual composition of the chamber gas mixture in response to said first and second signals wherein said first and second signals are representative of laser operational output parameters of said gas laser, said second signal from said wave meter which is distinct from said first signal.

In the preferred embodiment, the desired composition of gas mixture is about 0.1 percent fluorine, 1.0 percent krypton and 98.9 percent neon. The fluorine/neon gas mixture has a composition of about 1.0 percent fluorine and 99 percent neon. The krypton/neon gas mixture has a composition of about 1.0 percent krypton and 99 percent neon. The step of determining the difference between a desired composition and an actual composition comprises the step of detecting the difference in an operational efficiency of the excimer laser from a desired efficiency level in response to signals from a wave meter.

Also according to the invention there is provided an apparatus for varying a chamber gas mixture within a gas chamber of a gas laser, said chamber gas mixture including a halogen, a first noble gas and a second noble gas, with said chamber gas mixture having a desired composition, said apparatus comprising:
a first gas source for selectively supplying a first gas mixture consisting of the halogen and the second noble gas to said gas chamber
a second gas source for selectively supplying a second gas mixture consisting of the first noble gas and the second noble gas to said gas chamber ;
a bleed-down means for selectively releasing a portion of said chamber gas mixture; and
a wave meter for producing a first signal ;
a line narrowing mechanism for producing a second signal; and
a control means for separately controlling operation of said first gas source, said second gas source, and said bleed-down means to vary an actual gas composition of said chamber gas mixture toward the desired composition in response to said first signal and said second signal wherein said first and second signals are representative of laser operational output parameters of said gas laser, said second signal being produced by said line narrowing mechanism in response to a signal from said wave meter which is distinct from said first signal.

The provision of separate sources for fluorine/neon and krypton/neon allows depletion of krypton to be compensated for without requiring a complete replacement of the gas within the excimer laser. Furthermore, by providing a pair of gas sources in combination with a bleed-down capability, the actual composition of the gas mixture within the excimer laser can be varied in a refined and precise manner to maintain an optimal gas mixture composition for extended periods of time. Thus, the time period between complete flushing and replacement of the gas mixture is expanded and the overall cost of gasses required for use in the chamber is minimized.

Thus, the general objects of the invention set forth above are achieved. Other objects and advantages of the invention will be apparent from the detailed description of the invention set forth below.

### BRIEF DESCRIPTION OF THE DRAWINGS

The present invention will be understood more fully from the detailed description given below and from the accompanying drawings of the preferred embodiment of the invention in which:
Figure 1 is a block diagram, somewhat in schematic form of an excimer laser provided with a gas replenishment apparatus in accordance with a preferred embodiment of the invention.
Figure 2 is a block diagram illustrating a gas replenishment method, particularly for use with the excimer laser apparatus illustrated in Figure 1.

### DETAILED DESCRIPTION OF THE INVENTION

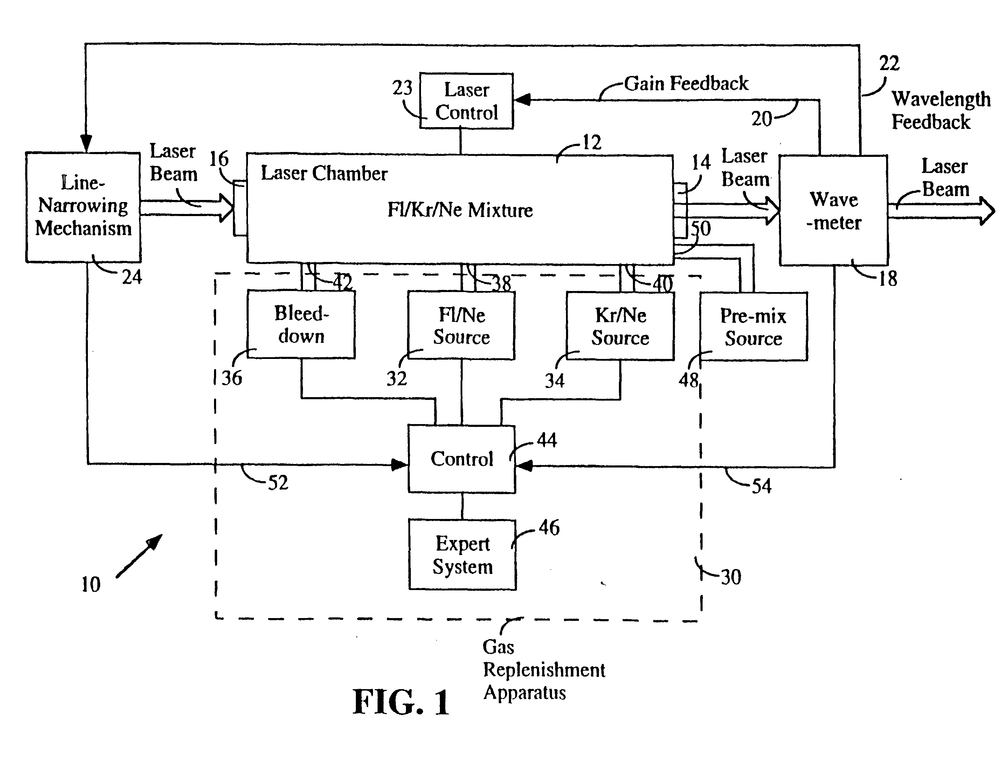

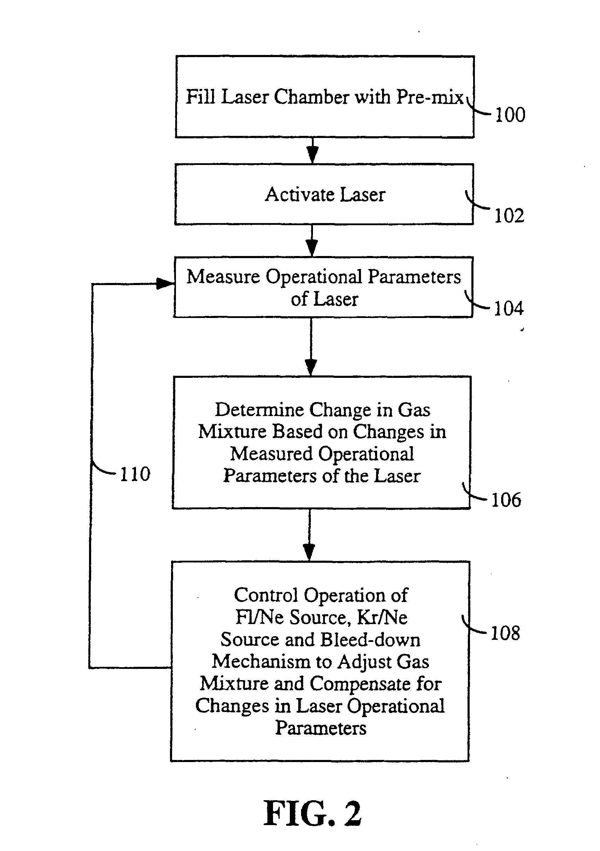

Referring to Figures 1 and 2, preferred embodiments of the invention will now be described.

Figure 1 illustrates a portion of an excimer laser 10 having a gas lazing chamber 12 filled with a mixture of fluorine, krypton and neon. A pair of windows 14 and 16 are provided on opposing ends of chamber 12 for emitting a coherent laser beam generated within chamber 12. A wave meter 18 is positioned adjacent to window 14 for receiving the laser beam transmitted through window 14. Wave meter 18 includes mechanisms for determining the precise wavelength and band-width of the laser beam emitted from chamber 12. Wave meter 18 also includes mechanisms for determining the power or gain of the laser beam. Wave meter 18 outputs signals representative of the gain and the wavelength along output lines 20 and 22 respectively. The gain signal, output along line 20, is received by a laser control mechanism 23. Laser control mechanism 23 controls operation of excimer laser 10 to adjust the gain of the laser beam generated within laser chamber 12. Laser control mechanism 23 also preferably operates to pulse the laser beam at a desired pulse rate.

The wavelength signal output from wave meter 18 along line 22 is received by a line-narrowing mechanism 24, which adjusts the wavelength of the laser beam generated within chamber 12. Thus, with the provision of wave meter 18 and line narrowing mechanism 24, The gain and wavelength of the laser beam generated by excimer laser 10 may be controlled to achieve desired gain and frequency. Preferably, control mechanism 23 operates to pulse the laser beam generated within chamber 12 to achieve a pulsed, rather than a continuous, laser beam. The components of excimer laser 10, thus far described, may be of conventional design and fabrication and will not be described in further detail herein. However, a preferred excimer laser assembly is set forth in U.S. Patent No. 4,959,840, entitled "Compact Excimer Laser Including an Electrode Mounted in Insulating Relationship to Wall of the Laser", assigned to the assignee of the present application. A preferred wave meter for use with the excimer laser is set forth in U.S. Patent No. 5,025,445, entitled "System for, and Method of, Regulating the Wavelength of a Light Beam", also assigned to the assignee of the present application.

In addition to the components thus far described, excimer laser 10 includes a gas replenishment apparatus, generally denoted 30. Gas replenishment apparatus 30 includes a fluorine/neon gas source 32 a krypton/ neon gas source 34, and a bleed-down mechanism 36. Fluorine/ neon gas source 32 is connected to chamber 12 via an input port 38. Fluorine/neon gas source 32 includes appropriate mechanisms for supplying selected amounts of a fluorine/ neon gas mixture into chamber 12. Krypton/ neon gas source 34 is connected to chamber 12 via an inlet port 40 and includes appropriate mechanisms for supplying a desired amount of krypton/neon gas mixture into chamber 12. Bleed-down mechanism 36 is connected to an output port 42 of chamber 12 and includes mechanisms for selectively releasing a desired amount of gas mixture from within chamber 12. A control mechanism 44 is connected to each of gas sources 32 and 34 and bleed-down mechanism 36 for controlling operation thereof. Control mechanism 44 may include, as a component, an expert system 46 described below.

Preferably, chamber 12 is initially filled with a pre-mix of fluorine, krypton and neon, with the pre-mix having the composition of 0.1 percent fluorine, 1.0 percent krypton, and 98.9 percent neon. A pre-mix source 48 is connected to chamber 12 through an inlet port 50 for initially filling chamber 12 with the pre-mix. With the relative gas chamber mixture described above, excimer laser 10 preferably generates a laser beam having wavelength of 248 nano-meters. Wave meter 18 and line narrowing mechanism 24 operate in combination to maintain the wavelength of the laser beam at the desired wavelength of 248 nano-meters with a bandwidth of no more than 1 pico-meter (full-width half-maximum).

Although initially provided with a pre-mix having the precise composition noted above, the mixture within chamber 12 varies as a function of time while excimer laser 10 is operated. In particular, a portion of the fluorine is depleted during operation, possibly by reaction with other materials or compositions within laser chamber 12. The krypton and neon are also depleted, though to a lesser extent, during operation of the laser, perhaps by leakage from chamber 12. As a result, the relative composition of the mixture within chamber 12 varies as a function of time and can deviate, somewhat substantially, from the original pre-mix composition. A substantial variation from the composition of the gas mixture can affect the efficiency of the laser, including a general lowering in the laser gain and a deviation in the precise wavelength and bandwidth achievable. A variation in the composition may also affect the ability to pulse the laser beams desired rate. Replenishment apparatus 30 operates to maintain the composition within chamber 12 to that of the original pre-mix composition. In other words, replenishment apparatus 30 operates to replenish the fluorine, krypton and neon as they are depleted from the chamber.

The separate fluorine/neon and krypton/neon gas sources are provided to allow both fluorine and krypton to be independently replenished within chamber 12. Fluorine/neon gas source 32 provides a mixture of 1 percent fluorine and 99 percent neon. Krypton/neon source 34 provides a mixture of 1 percent krypton and 99 percent neon. Bleed-down mechanism 36 allows a portion of the mixture within chamber 12 to be removed.

As an example, should fluorine be depleted without substantial depletion of krypton, fluorine/neon gas source 32 is controlled to add a desired amount of fluorine/neon to chamber 12 to increase the fluorine percentage therein. If, as a result, the overall pressure within chamber 12 exceeds a desired amount, excess gas may be removed from chamber 12 using bleed-down mechanism 36. If, particularly as a result of the use of bleed-down methods in 36, the krypton level within chamber 12 is significantly depleted, krypton/ neon source 34 is operated to add a quantity of krypton/neon to chamber 12 to compensate for the depleted krypton. In general, the operation of fluorine/neon source 32, krypton/neon source 34 and bleed-down mechanism 36 is controlled to maintain the mixture as close to the original pre-mix composition as possible. The various gas source and bleed-down mechanisms may be operated simultaneously to modify the gas mixture. In addition to toggling operation of the gas source and bleed-down mechanisms, control mechanisms 44 may also control the rate by which gases are exchanged with chamber 12. In this regard, gas flow regulators, not shown in Figure 1, may be employed for controlling the flow rate of gases into and out of chamber 12.

To automatically control operation of gas sources 32 and 34 and bleed-down mechanism 36, control mechanism 44 receives signals from line narrowing mechanism 24 and wave meter 18 along signal lines 52 and 54, respectively. From signals received along these lines, control mechanism 44 determines the extent to which the various gas mixture components have been depleted and controls gas sources 32 and 34 and bleed-down mechanism 36 accordingly to compensate for depletion. Although laser gain, wavelength, and bandwidth, are exemplary parameters from which control mechanism 44 determines deviations within the gas mixture, other parameters may also be employed including the pulse rate of the laser, the temperature, the pressure of the laser chamber and other general operational parameters as well. The various laser operational parameters such as gain, wavelength, band-width and the like together define an overall laser "efficiency". The relationship of the gas chamber composition to the various operational parameters is determined in advance by empirical methods. In other words, the gas mixture is selectively varied in accordance with changes in the operational parameters to determine effective strategies for compensating for changes in the parameters. Strategies which are unsuccessful are discarded. Strategies which prove to be successful are incorporated into logic in control unit 44. For example, if it is determined that a substantial drop in the gain of the laser is usually a result of fluorine depletion, then such a relationship is programmed within the logic of control unit 44, which operates to add fluorine in response to a drop in laser gain.

Control mechanism 44 is preferably a programmable computer provided with software and databases providing logic necessary for controlling operation of the gas sources and bleed-down mechanisms in response to changes in operational parameters. Preferably, the programs and databases include an expert system 46, which maintains a history of excimer laser 10 and, based on prior experience, controls operation of the gas source and bleed-down mechanisms in an optimal manner. Expert system 46 preferably maintains a database containing a history of the operational parameters of the system as a function of time as well as a history of the control of the gas source and the bleed-down mechanisms. In this manner, and with appropriate programming, expert system 46 determines to how best to control operation of the gas sources and bleed-down mechanisms to compensate for undesirable changes in the operation parameters of the laser.

Although a programmed control mechanism having an expert system is a preferred mechanism for controlling the operation of the gas sources and the bleed-down mechanism, such is not required.

Furthermore, although it is anticipated that pre-mix source 48 provides an optimal composition of gases, such need not be the case. If it is determined that the pre-mix composition is non-optimal, control mechanism 44 may control the gas sources and bleed-down mechanism in a manner to achieve an optimal mixture which differs from the pre-mix. For example, if it is determined that the pre-mix is provided with too low of a percentage of fluorine, gas replenishment mechanism 30 may be operated to immediately increase the amount of fluorine after chamber 12 is filled with the pre-mix.

As can be appreciated, a wide number of specific embodiments can be employed and various strategies and techniques used, all in accordance with the general principles of the invention.

Despite operation of replenishment 30, it is anticipated that the mixture within chamber 12 will be flushed and replaced periodically. Thus, the operation of the replenishment apparatus is not necessarily intended to completely prevent the need to flush the chamber and replace the gasses. Rather, operation of the replenishment mechanism is primarily provided for extending the period between necessary system flushes and for maintaining an optimal mixture during that period.

A method by which the gas mixture within an excimer laser is replenished and maintained is generally illustrated in Figure 2.
Initially, at step 100, a gas chamber of the excimer laser is filled with a pre-mix having a preferably optimal composition of fluorine, krypton and neon. At 102, the excimer laser is activated. Operational parameters of the laser are detected at step 104. The operational parameters may include the gain, frequency and bandwidth of the laser as well as the pulse repetition rate of the laser.

At 106, the system determines a change in the gas mixture causing the change in the operational parameters. Next, at 108, the separate fluorine/neon and krypton/neon sources and the bleed-down mechanism are controlled to compensate for changes in the gas mixture in an attempt to maintain an optimal mixture. Control of excimer laser 10 proceeds in a feedback loop denoted by line 110 in Figure 2. As such, the system continually monitors operational parameters of the laser and controls the separate gas sources and depletion mechanism accordingly to maintain an optimal overall laser efficiency.

Figure 2, thus, represents a general overview of method steps of the invention. Actual operation of the system may depend on numerous factors, described above, and various gas replenishment strategies may be employed.

What has been described is a method and apparatus for replenishing a gas mixture within an excimer gas laser. The general principles of the invention, although described above with reference to a fluorine/krypton excimer laser, may be applied to other excimer lasers and to other gas lasers as well. In general, principles of the invention may be advantageously exploited in any gas laser system employing two or more separate gas components which are subject to independent depletion. Thus, the exemplary embodiments described herein are merely illustrative of the invention and are not intended to limit the scope of the invention.

## Claims

1. A method for varying a chamber gas mixture in a gas chamber (12) of a gas laser (10), said chamber gas mixture including a halogen, a first noble gas and a second noble gas, said chamber gas mixture having a desired composition, said method comprising the steps of:
determining a difference between the desired composition and an actual composition of the chamber gas mixture;
determining a first amount of a first gas mixture that is to be added to the gas chamber, and a second amount of a second gas mixture that is to be added to the gas chamber to adjust the actual composition of said chamber gas mixture toward the desired composition; and
selectively adding said first amount of said first gas mixture and said second amount of said second gas mixture into said gas chamber, and selectively releasing a portion of said chamber gas mixture from said gas chamber (108);
with each of the foregoing steps performed by amounts sufficient to adjust an actual composition of said chamber gas mixture within said chamber toward the desired composition; and **characterized by**
said first gas mixture consisting of the halogen and the second noble gas and said second gas mixture consisting of the first noble gas and the second noble gas,
receiving a first signal (54) from a wave meter (18) and a second signal (52) from a line narrowing mechanism (24); and
determining the difference between the desired composition and the actual composition of the chamber gas mixture in response to said first and second signals (106) wherein said first and second signals are representative of laser operational output parameters of said gas laser, said second signal being produced by said line narrowing mechanism in response to a signal (22) from said wave meter which is distinct from said first signal.

2. The method of claim 1, wherein determining the difference between the desired composition of the chamber gas mixture and the actual composition of the chamber gas mixture (106) is partially in response to a wavelength measured by said wave meter.

3. The method of claims 1 or 2, wherein said halogen is fluorine, said first noble gas is krypton and said second noble gas is neon, said chamber gas mixture is approximately 0.1% fluorine, 1.0% krypton and 98.9% neon, said first gas mixture is approximately 1.0% fluorine and 99% neon, and said second gas mixture is approximately 1.0% krypton and 99% neon.

4. The method of claim 1, 2 or 3, wherein the gas laser (10) is an excimer laser.

5. An apparatus for varying a chamber gas mixture within a gas chamber (12) of a gas laser (10), said chamber gas mixture including a halogen, a first noble gas and a second noble gas, with said chamber gas mixture having a desired composition, said apparatus comprising:
a first gas source (32) for selectively supplying a first gas mixture to said gas chamber (12);
a second gas source (34) for selectively supplying a second gas mixture to said gas chamber (12);
a bleed-down means (36) for selectively releasing a portion of said chamber gas mixture; and **characterized by**
said first gas mixture consisting of the halogen and the second noble gas and said second gas mixture consisting of the first noble gas and the second noble gas,
a wave meter (18) for producing a first signal (54);
a line narrowing mechanism (24) for producing a second signal (52); and
a control means (44) for separately controlling operation of said first gas source (32), said second gas source (34), and said bleed-down means (36) to vary an actual gas composition of said chamber gas mixture toward the desired composition in response to said first signal (54) and said second signal (52) wherein said first and second signals are representative of laser operational output parameters of said gas laser, said second signal being produced by said line narrowing mechanism in response to a signal (22) from said wave meter which is distinct from said first signal.

6. The apparatus of claim 5, wherein said control means (44) is responsive to a difference between the desired composition and the actual composition detected partially by a change in a wavelength measured by said wave meter (18).

7. The apparatus of claims 5 or 6, wherein said halogen is fluorine, said first noble gas is krypton and said second noble gas is neon, said chamber gas mixture is approximately 0.1% fluorine, 1.0% krypton and 98.9% neon, said first gas mixture is approximately 1.0% fluorine and 99% neon, and said second gas mixture is approximately 1.0% krypton and 99% neon.

8. The apparatus of claims 5, 6 or 7, wherein the gas laser (10) is an excimer laser.

## Patentansprüche

1. Ein Verfahren zum Variieren einer Kammergasmischung in einer Gaskammer (12) eines Gaslasers (10), wobei die Kammergasmischung ein Halogen, ein erstes Edelgas und ein zweites Edelgas enthält, wobei die Kammergasmischung eine gewünschte Zusammensetzung aufweist, wobei das Verfahren die Schritte umfaßt:
Bestimmen einer Differenz zwischen der gewünschten Zusammensetzung und einer tatsächlichen Zusammensetzung der Kammergasmischung;
Bestimmen einer ersten Menge einer ersten Gasmischung, die zu der Gaskammer hinzugefügt werden soll, und einer zweiten Menge einer zweiten Gasmischung, die zu der Gaskammer hinzugefügt werden soll, um die tatsächliche Zusammensetzung der Kammergasmischung in Richtung der gewünschten Zusammensetzung einzustellen; und
selektives Zugeben der ersten Menge der ersten Gasmischung und der zweiten Menge der zweiten Gasmischung in die Gaskammer und selektives Freisetzen eines Teils der Kammergasmischung aus der Gaskammer (108);
wobei jeder der vorgenannten Schritte an Mengen ausgeführt wird, die ausreichend sind, um eine tatsächliche Zusammensetzung der Kammergasmischung in der Kammer in Richtung der gewünschten Zusammensetzung einzustellen; und **gekennzeichnet dadurch, daß**
die erste Gasmischung aus dem Halogen und dem zweiten Edelgas besteht und zweite Gasmischung aus dem ersten Edelgas und dem zweiten Edelgas besteht,
ein erstes Signal (54) aus einem Wellenmesser (18) und ein zweites Signal (52) aus einem Line-Narrowing-Mechanismus (24) empfangen wird; und
die Differenz zwischen der gewünschten Zusammensetzung und der tatsächlichen Zusammensetzung der Kammergasmischung in Abhängigkeit von dem ersten und dem zweiten Signal bestimmt wird (106), wobei das erste und das zweite Signal für Laserbetriebsausgangsparameter des Gaslasers repräsentativ sind, wobei das zweite Signal von dem Line-Narrowing-Mechanismus in Abhängigkeit von einem Signal (22) aus dem Wellenmesser, welches von dem ersten Signal verschieden ist, erzeugt wird.

2. Das Verfahren nach Anspruch 1, wobei das Bestimmen der Differenz zwischen der gewünschten Zusammensetzung der Kammergasmischung und der tatsächlichen Zusammensetzung der Kammergasmischung (106) teilweise von einer Wellenlänge abhängig ist, die von dem Wellenmesser gemessen wird.

3. Das Verfahren nach Anspruch 1 oder 2, wobei das Halogen Fluor ist, das erste Edelgas Krypton ist und das zweite Edelgas Neon ist, wobei die Kammergasmischung etwa 0,1% Fluor, 1,0% Krypton und 98,9% Neon enthält, wobei die erste Gasmischung etwa 1,0% Fluor und 99% Neon und die zweite Gasmischung etwa 1,0% Krypton und 99% Neon enthält.

4. Das Verfahren nach Anspruch 1, 2 oder 3, wobei der Gaslaser (10) ein Excimer-Laser ist.

5. Eine Einrichtung zum Variieren einer Kammergasmischung in einer Gaskammer (12) eines Gaslasers (10), wobei die Kammergasmischung ein Halogen, ein erstes Edelgas und ein zweites Edelgas enthält, wobei die Kammergasmischung eine gewünschte Zusammensetzung aufweist, wobei die Einrichtung aufweist:
eine erste Gasquelle (32) zum selektiven Liefern einer ersten Gasmischung in die Gaskammer (12);
eine zweite Gasquelle (34) zum selektiven Liefern einer zweiten Gasmischung in die Gaskammer (12);
ein Ablaßmittel (36) zum selektiven Freisetzen eines Teils der Kammergasmischung; und **gekennzeichnet**
**dadurch, daß** die erste Gasmischung aus dem Halogen und dem zweiten Edelgas besteht und daß die zweite Gasmischung aus dem ersten Edelgas und dem zweiten Edelgas besteht,
durch einen Wellenmesser (18) zum Erzeugen eines ersten Signals (54);
einen Line-Narrowing-Mechanismus (24) zum Erzeugen eines zweiten Signals (52); und
ein Steuermittel (44) zum separaten Steuern des Betriebs der ersten Gasquelle (32), der zweiten Gasquelle (34) und des Ablaßmittels (36), um eine tatsächliche Gaszusammensetzung der Kammergasmischung in Richtung der gewünschten Zusammensetzung in Abhängigkeit von dem ersten Signal (54) und dem zweiten Signal (52) zu variieren, wobei das erste und das zweite Signal für Laserbetriebsausgangsparameter des Gaslasers repräsentativ sind, wobei das zweite Signal von dem Line-Narrowing-Mechanismus in Abhängigkeit von einem Signal (22) aus dem Wellenmesser, welches von dem ersten Signal verschieden ist, erzeugt wird.

6. Die Einrichtung nach Anspruch 5, wobei die Steuermittel (54) auf eine Differenz zwischen der gewünschten Zusammensetzung und der tatsächlichen Zusammensetzung ansprechen, die zum Teil durch eine Änderung in einer Wellenlänge, die von dem Wellenmesser (18) gemessen wird, erfaßt wird.

7. Die Einrichtung nach Anspruch 5 oder 6, wobei das Halogen Fluor ist, das erste Edelgas Krypton ist und das zweite Edelgas Neon ist, wobei die Kammergasmischung etwa 0,1% Fluor, 1,0% Krypton und 98,9% Neon aufweist, wobei die erste Gasmischung etwa 1,0% Fluor und 99% Neon und die zweite Gasmischung etwa 1,0% Krypton und 99% Neon enthält.

8. Die Einrichtung nach den Ansprüchen 5, 6 oder 7, wobei der Gaslaser (10) ein Excimer-Laser ist.

## Revendications

1. Un procédé pour faire varier un mélange gazeux de chambre dans une chambre de gaz (12) d'un laser à gaz (10), ledit mélange gazeux de chambre comprenant un halogène, un premier gaz noble et un second gaz noble, ledit mélange gazeux de chambre possédant une composition souhaitée, ledit procédé comprenant les étapes consistant à :
déterminer une différence entre la composition souhaitée et une composition réelle du mélange gazeux de chambre ;
déterminer une première quantité d'un premier mélange gazeux qui doit être ajouté à la chambre de gaz, et une seconde quantité d'un second mélange gazeux devant être ajouté à la chambre de gaz afin d'ajuster la composition réelle dudit mélange gazeux de la chambre vers la composition souhaitée ; et
ajouter sélectivement ladite première quantité dudit premier mélange gazeux et ladite seconde quantité dudit second mélange gazeux dans ladite chambre de gaz, et libérer sélectivement une partie dudit mélange gazeux de la chambre de ladite chambre de gaz (108) ;
avec chacune des étapes précédentes étant réalisée par des quantités suffisantes pour ajuster une composition réelle dudit mélange gazeux de la chambre dans ladite chambre vers la composition souhaitée ; et **caractérisé par** ledit premier mélange gazeux composé de l'halogène et du second gaz noble et ledit second mélange gazeux composé du premier gaz noble et du second gaz noble,
la réception d'un premier signal (54) émis par un ondemètre (18) et d'un second signal (52) émis par un mécanisme de rétrécissement de conduite (24) ; et
la détermination de la différence entre la composition souhaitée et la composition réelle du mélange gazeux de la chambre en réaction auxdits premier et second signaux (106), dans lequel lesdits premier et second signaux sont représentatifs des paramètres de sortie opérationnels du laser dudit laser à gaz, ledit second signal étant produit par ledit mécanisme de rétrécissement de conduite en réaction à un signal (22) issu dudit ondemètre qui est distinct dudit premier signal.

2. Le procédé selon la revendication 1, dans lequel la détermination de la différence entre la composition souhaitée du mélange gazeux de la chambre et la composition réelle du mélange gazeux de la chambre (106) est partiellement en réaction à une longueur d'onde mesurée par ledit ondemètre.

3. Le procédé selon la revendication 1 ou 2, dans lequel ledit halogène est du fluor, ledit premier gaz noble est du krypton et ledit second gaz noble est du néon, ledit mélange gazeux de la chambre est environ 0,1% de fluor, 1,0% de krypton et 98,9% de néon, ledit premier mélange gazeux est environ 1,0% de fluor et 99% de néon, et ledit second mélange gazeux est environ 1,0% de krypton et 99% de néon.

4. Le procédé selon la revendication 1, 2 ou 3, dans lequel le laser à gaz (10) est un laser excimère.

5. Un appareil pour faire varier un mélange gazeux de chambre dans une chambre de gaz (12) d'un laser à gaz (10), ledit mélange gazeux de chambre comprenant un halogène, un premier gaz noble et un second gaz noble, avec ledit mélange gazeux de chambre possédant une composition souhaitée, ledit appareil comprenant :
une première source de gaz (32) pour fournir sélectivement un premier mélange gazeux à ladite chambre de gaz (12) ;
une seconde source de gaz (34) pour fournir sélectivement un second mélange gazeux à ladite chambre de gaz (12) ;
un moyen de purge (36) pour libérer sélectivement une partie dudit mélange gazeux de la chambre ; et **caractérisé par** ledit premier mélange gazeux composé de l'halogène et du second gaz noble et ledit second mélange gazeux composé du premier gaz noble et du second gaz noble,
un ondemètre (18) pour produire un premier signal (54) ;
un mécanisme de rétrécissement de conduite (24) pour produire un second signal (52) ;
et
un moyen de contrôle (44) pour contrôler séparément le fonctionnement de ladite première source de gaz (32), de ladite seconde source de gaz (34) et dudit mécanisme de purge (36) afin de faire varier une composition de gaz réelle dudit mélange gazeux de la chambre vers la composition souhaitée en réaction audit premier signal (54) et audit second signal (52), dans lequel lesdits premier et second signaux sont représentatifs des paramètres de sortie opérationnels du laser dudit laser à gaz, ledit second signal étant produit par ledit mécanisme de rétrécissement de conduite en réaction à un signal (22) issu dudit ondemètre qui est distinct dudit premier signal.

6. L'appareil selon la revendication 5, dans lequel ledit moyen de contrôle (44) réagit à une différence entre la composition souhaitée et la composition réelle détectée partiellement par un changement d'une longueur d'onde mesuré par ledit ondemètre (18).

7. L'appareil selon la revendication 5 ou 6, dans lequel ledit halogène est du fluor, ledit premier gaz noble est du krypton et ledit second gaz noble est du néon, ledit mélange gazeux de la chambre est environ 0,1% de fluor, 1,0% de krypton et 98,9% de néon, ledit premier mélange gazeux est environ 1,0% de fluor et 99% de néon, et ledit second mélange gazeux est environ 1,0% de krypton et 99% de néon.

8. L'appareil selon les revendications 5, 6 ou 7, dans lequel le laser à gaz (10) est un laser excimère.
